Europäisches Patentamt

European Patent Office

Office européen des brevets

(19)

(11) **EP 1 193 893 A1**

(12) **EUROPEAN PATENT APPLICATION**

(43) Date of publication:
**03.04.2002 Bulletin 2002/14**

(51) Int Cl.$^7$: **H04B 10/08**

(21) Application number: **00121567.2**

(22) Date of filing: **02.10.2000**

(84) Designated Contracting States:
**AT BE CH CY DE DK ES FI FR GB GR IE IT LI LU
MC NL PT SE**
Designated Extension States:
**AL LT LV MK RO SI**

(71) Applicant: **TELEFONAKTIEBOLAGET LM
ERICSSON
126 25 Stockholm (SE)**

(72) Inventors:
• **Vanin, Evgeny
  125 73 Älvsjö (SE)**

• **Jacobsen, Gunnar
  125 55 Älvsjö (SE)**
• **Persson, Ulf
  136 53 Haninge (SE)**

(74) Representative: **Gray, Helen Mary et al
Albihns GmbH
Grasserstrasse 10
80339 München (DE)**

(54) **Method of characterising optical amplifiers**

(57) The invention concerns a method of determining the spectral characteristics of a optical amplifiers. Two methods are proposed for determining the spectral gain and the ASE spectral power density of an amplifier. Each method uses two spectral functions $T(\lambda, \lambda_{ref})$, $R(\lambda, \lambda_{ref})$ and $T_{ASE}(\lambda, \lambda_{ref})$, $R_{ASE}(\lambda, \lambda_{ref})$, respectively. The spectral functions are determined by calculation using two measured spectra of gain and ASE output power density, respectively, made at two different saturation states of an amplifier. The functions are independent of the operating conditions of the amplifier. This allows deviations in the calculated functions to be immediately identified and further enables the optimal area of application of the model to be located.

Fig. 2

**Description**

Field of invention

The invention relates to a method of characterising optical amplifiers, particularly active fibre and planar optical amplifiers.

Background art

Optical amplifiers are essential components of optical transmission systems. They provide efficient amplification of transmitted optical signals and are thus able to compensate for optical fibre losses over a broad wavelength range.

A good knowledge of the characteristics of optical amplifiers is important for the design of optical transmission systems. Ideally both the spectral gain and the noise figure of an optical amplifier should be known. These indicate the degree of amplification an optical signal at a certain wavelength will undergo and the how much noise, generally in the form of amplified spontaneous emission (ASE), will be added to a signal at the amplifier output, respectively. Such information is generally not available from manufacturers of amplifiers. While these characteristics can be measured using the input and output signals relatively easily when the amplifier is operated at specific set conditions, that is, at a fixed constant pumping power and with a spectrally constant input signal, predicting the spectral gain and noise figure of an amplifier operating at different conditions, for example with different values of pumping power and with input signals having different spectral content, is more complex. However, this general information is necessary and often invaluable for many applications, wavelength division multiplexed (WDM) transmission systems being just one.

Attempts have been made to present a model for optical fibre amplifiers. One method used to determine amplifier gain is described in a paper by D. Bonnedal "EDFA gain described with a black box model" presented at the Optical Amplifiers and Their Applications Topical Meeting (OA&A) in Montery, California, July 11-13, 1996 and published in the OSA publication 'Trends in Optics and Photonics Series', volume on OA&A, October 1996. This paper describes a method of determining the spectral gain of a fibre amplifier by interpolation from two measured gain spectra. This model is developed further in G. Jacobsen et al. "Pump power dependent black box EDFA model", Journal of Optical communications 21 (2000) 675. This reference extends the model to include a dependence of the modelled spectral gain on pump power. The predicted gain values are still determined from two measured reference spectra. In addition, this reference proposes a model for the prediction of the noise figure which is likewise derived by interpolation of two measured noise figure curves.

In both proposed methods the reference curves must be properly selected if the resulting derived gain and noise figures are to be accurate. However, there is no mechanism within the disclosed model for correctly selecting the curves. Moreover, if the selected reference curves can not provide an accurate model, there is no way of determining this from the resulting values, nor is there any means of determining under which conditions the model is accurate for any particular amplifier type. The method proposed in the second paper for deriving the spectral noise figure is based on an empirical method and is very inaccurate.

A further model is proposed in "A black box model of EDFA's operating in WDM systems", J Burgmeier et al., Jounal of Lightwave Technology, Vol. 16, No. 7, July 1998. This paper discloses an analytical solution for characterising the effective spectral gain of compound optical fibre amplifiers. The described solution proposes a function $T_{\lambda ref}(\lambda)$, called the dynamic gain tilt function, which is defined in terms of two measured spectral gain characteristics.

While the dynamic tilt function goes some way towards characterising the amplifier spectral gain, a full accurate analytical model of the spectral gain is not suggested. Moreover, this reference makes no attempt to characterise the noise of an optical amplifier.

In the light of the prior art, it is an object of the present invention to propose a model for the spectral characteristics of an optical amplifier, which enables an amplifier to be accurately characterised on the basis of measured values.

SUMMARY OF INVENTION

The invention resides in a method of determining the spectral gain of an optical amplifier. The method includes using two spectral gain functions $T(\lambda, \lambda_{ref})$ and $R(\lambda, \lambda_{ref})$, which are each expressed in terms of two reference gain spectra measured in dB at different saturation states of the amplifier and a reference wavelength $\lambda_{ref}$. In addition to these two spectral gain functions, the saturated gain of the amplifier measured in dB at the reference wavelength $G(\lambda_{ref})$ is required. The spectral gain in dB is then fully characterised by the following expression: $G(\lambda) = T(\lambda, \lambda_{ref}) \cdot G(\lambda_{ref}) + R(\lambda, \lambda_{ref})$.

With this method the spectral gain of an amplifier can be described completely.

The invention further resides in a method of determining the amplified spontaneous emission (ASE) spectral output power density of an optical amplifier. This method includes using two spectral noise functions $T_{ASE}$ ($\lambda$, $\lambda_{ref}$) and $R_{ASE}$ ($\lambda$, $\lambda_{ref}$), both of which are expressed in terms of two reference amplifier output power density spectra in dB measured at different saturation states of the amplifier and a reference wavelength $\lambda_{ref}$. The method further requires the determination of measured ASE output power density of the saturated amplifier in dB at the reference wavelength $S_{ASE}(\lambda_{ref})$. Using the two functions and the measured ASE power density in dB, the ASE output power density $S_{ASE}$ ($\lambda$) in dB at any wavelength $\lambda$ is calculated according to the expression:

$$S_{ASE} (\lambda) = T_{ASE} (\lambda, \lambda_{ref}) \cdot S_{ASE}(\lambda_{ref}) + R_{ASE}(\lambda, \lambda_{ref}).$$

This method allows the ASE spectral power density of an amplifier to be completely described.

The two spectral gain and ASE power density functions are determined by calculation using two measured spectra of gain and ASE output power density, respectively, made at two different saturation states of an amplifier. Moreover, one of the spectral gain functions is identical to the spectral ASE power density functions, so only three calculations are required to determine both the spectral gain and ASE spectral power density.

The functions are independent of the operating conditions of the amplifier. This allows deviations in the calculated functions to be immediately identified and further enables the optimal area of application of the model to be located.

Using both expressions, the noise figure of the amplifier may also be calculated. Thus complete spectral amplifier characteristics are obtainable simply by measurement of signal powers at the input and output of the amplifier to determine three spectral functions. Moreover, other components that are contained in the amplifier module, such as isolators, filters, couplers and the like are likewise described by the model.

BRIEF DESCRIPTION OF THE DRAWINGS

Further objects and advantages of the present invention will become apparent from the following description of the preferred embodiments that are given by way of example with reference to the accompanying drawings. In the figures:

Fig. 1    schematically illustrates an optical fibre amplifier;

Fig.2    shows a spectral gain function $T(\lambda)$ calculated from experimental measurements for a first amplifier type;

Fig.3    shows a spectral gain function $R(\lambda)$ calculated from experimental measurements for the first amplifier type;

Fig.4    shows a spectral noise function $T_{ASE}(\lambda)$ calculated from experimental measurements for the first amplifier type;

Fig.5    shows a spectral noise function $R_{ASE}(\lambda)$ calculated from experimental measurements for the first amplifier type;

Fig.6    shows a spectral gain function $T(\lambda)$ calculated from experimental measurements for a second amplifier type;

Fig.7    shows a spectral gain function $R(\lambda)$ calculated from experimental measurements for the second amplifier type;

Fig.8    shows a spectral noise function $T_{ASE}(\lambda)$ calculated from experimental measurements for the second amplifier type;

Fig.9    shows a spectral noise function $R_{ASE}(\lambda)$ calculated from experimental measurements for the second amplifier type; and

Fig.10    schematically illustrates an arrangement in an optical transmission system for controlling amplifier output power.

DETAILED DESCRIPTION OF THE DRAWINGS

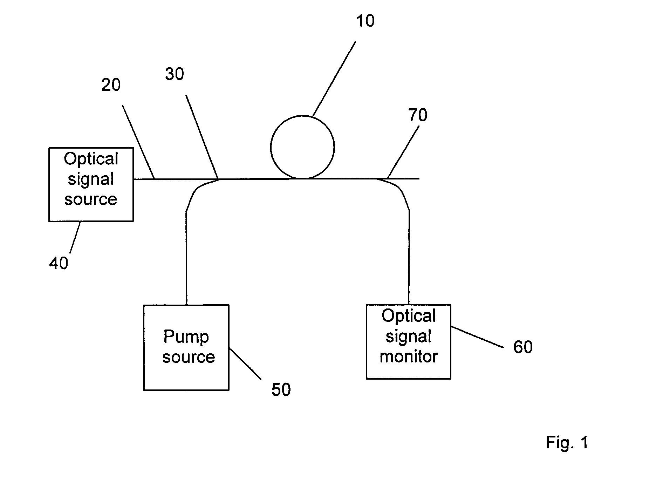

Fig. 1 shows a schematic of a simple optical fibre amplifier. This amplifier includes a doped fibre 10, which typically consists of a glass fibre doped with rare earth ions. In the exemplary embodiment this fibre is doped with Erbium ions $Er^{3+}$, and the whole is commonly referred to as an erbium doped fibre amplifier or EDFA. The doped or active fibre 10 is coupled to an input optical fibre 20 via an optical coupler 30. An optical signal source connected to the input fibre 20 provides the optical input signal to the amplifier. A source of optical pumping power 50 , which controls the gain of the amplifier is also connected to the active fibre 10 either via the same coupler 30, or via a separate non-illustrated coupler. The pumping source 50 includes a pumping laser driven with a suitable drive current. This drive current determines the power of the optical pumping signal fed to the active fibre 10. It will be appreciated that an amplifier may have several pumps, with the power or gain control of the amplifier being controlled by varying one or more any one of the pump lasers.

As shown in Fig. 1, an optical signal monitor 60 may also be provided to monitor the output signal power of the amplifier. This monitor is connected to an optical coupler 70 that extracts a defined proportion of the signal power from the active fibre output. This monitor 60 may include an opto-electric converter such as a photodetector, phototransistor or the like, and a suitably arranged current or voltage measuring device.

Other components may also be arranged in the amplifier circuit, such as filters, isolators and the like.

Throughout this document capital letters are used to designate quantities expressed in dB while the corresponding small case letters designate the same quantity expressed in linearly. Thus for example G is gain expressed in dB, while g is real gain. Similarly, $S_{ASE}(\lambda)$ is used to designate the ASE spectral power density in dB while $s_{ASE}(\lambda)$ is the ASE spectral power density in W/nm.

In accordance with the present invention, the spectral gain of a homogeneously broadened amplifier G expressed in dB at any wavelength $\lambda$, is characterised by the following equation:

$$G\ (\lambda) = T(\lambda,\ \lambda_{ref}) \cdot G\ (\lambda_{ref}) + R(\lambda,\lambda_{ref}),$$

Where G $(\lambda_{ref})$ is the gain of the saturated amplifier in dB measured at a reference wavelength $\lambda_{ref}$. This reference wavelength $\lambda_{ref}$ is preferably an input wavelength that differs from the input saturating wavelength. In this equation, two spectral gain functions $T(\lambda,\lambda_{ref})$ and $R(\lambda,\lambda_{ref})$ characterise a specific amplifier and are independent of the operating conditions of the amplifier. In other words the functions $T(\lambda,\ \lambda_{ref})$ and $R(\lambda,\lambda_{ref})$ are constant for different optical input signal and pumping powers. Thus when the spectral gain functions $T(\lambda,\ \lambda_{ref})$ and $R(\lambda,\lambda_{ref})$ are known, the spectral gain $G(\lambda)$ of the amplifier for all operating conditions can be fully characterised using a measurement of gain at the reference wavelength G $(\lambda_{ref})$.

The gain functions $T(\lambda,\ \lambda_{ref})$ and $R(\lambda,\lambda_{ref})$ are defined in terms of the amplifier gain at the reference wavelength $\lambda_{ref}$ as follows:

$$T(\lambda,\lambda_{ref}) = \frac{G_A(\lambda) - G_B(\lambda)}{G_A(\lambda_{ref}) - G_A(\lambda_{ref})},$$

and

$$R(\lambda,\lambda_{ref}) = \frac{G_A(\lambda_{ref}) \cdot G_B(\lambda) - G_A(\lambda) \cdot G_B(\lambda_{ref})}{G_A(\lambda_{ref}) - G_B(\lambda_{ref})}$$

where the two subscripts A and B to the gain G denote different saturation states of the amplifier. These two saturation states represent different average population inversion states of the amplifier. The saturation state of an amplifier is determined by the optical pumping and input signal powers to the amplifier. Thus $G_A(\lambda)$ is the gain in dB measured at wavelength $\lambda$ at the saturation state A defined by a first optical pump and saturating input signal wavelength power, while $G_B(\lambda_{ref})$ is the gain in dB measured at wavelength $\lambda$ at the saturation state B defined by a second optical pump and saturating input signal wavelength power. These spectral functions can thus be calculated using the above expressions from two measured reference spectral gain curves for the two saturation states A and B. Preferably the two saturation states are selected such that the resulting spectral curves are sufficiently different to provide a usable value. It is apparent from the expression defining the functional form $T(\lambda,\ \lambda_{ref})$ that choosing saturation states $G_A$ and $G_B$ that are too close together will result in both a very small denominator and numerator which is likely to increase the proportion of error in the solution. Preferably the reference curves are be measured in the limiting amplifier operation ranges, with one curve being close to the highest pump power and the lowest input signal power and the other being close to the lowest pump power and the highest input signal power. As mentioned before, the reference wavelength $\lambda_{ref}$ is preferably not the saturating wavelength.

Similarly, the ASE spectral power density $S_{ASE}(\lambda)$ expressed in dB generated in a homogeneously-broadened amplifier is defined as

$$S_{ASE}(\lambda) = T_{ASE}(\lambda,\lambda_{ref}) \cdot S_{ASE}(\lambda_{ref}) + R_{ASE}(\lambda,\lambda_{ref}),$$

Where $S_{ASE}(\lambda_{ref})$ is the ASE spectral power density expressed in dB at a reference wavelength $\lambda_{ref}$. This equation likewise uses two functions to characterise the amplifier, which are defined as spectral noise functions, $T_{ASE}(\lambda, \lambda_{ref})$ and $R_{ASE}(\lambda, \lambda_{ref})$. In a similar manner to the spectral gain functions these functions are defined as follows:

$$T_{ASE}(\lambda,\lambda_{ref}) \frac{S_{ASE}(\lambda)\text{-}S_{ASE}(\lambda)}{S_{ASE\,A}(\lambda_{ref})\text{-}S_{ASE\,B}(\lambda_{ref})},$$

$$R_{ASE}(\lambda,\lambda_{ref}) = \frac{S_{ASE\,A}(\lambda_{ref}) \cdot S_{ASE\,B}(\lambda)\text{-}S_{ASE\,A}(\lambda) \cdot S_{ASE\,B}(\lambda_{ref})}{S_{ASE}(\lambda_{ref})\text{-}S_{ASE\,B}(\lambda_{ref})}$$

The values $S_{ASEA}(\lambda)$ and $S_{ASEB}(\lambda)$ are the ASE power density values expressed in dB measured at the output of the amplifier at a wavelength $\lambda$ for two different saturation conditions A and B of the amplifier. As for the spectral gain functions $T(\lambda, \lambda_{ref})$ and $R(\lambda,\lambda_{ref})$ the different saturation states of the amplifier should be chosen such that the curves obtained after measuring $S_{ASEA}(\lambda)$ and $S_{ASEB}(\lambda)$ at various wavelengths are sufficiently different to provide usable values for calculation of the spectral noise functional forms.

The spectral noise function $T_{ASE}(\lambda,\lambda_{ref})$ is actually identical to the spectral gain function $T(\lambda, \lambda_{ref})$ given above, thus

$$T_{ASE}(\lambda,\lambda_{ref}) = \frac{G_A(\lambda)\text{-}G_B(\lambda)}{G_A(\lambda_{ref})\text{-}G_A(\lambda_{ref})},$$

The spectral noise figure of the amplifier is defined by the equation

$$NF(\lambda) = \frac{\lambda^3 S_{ASE}(\lambda)/hc^2 + 1}{g(\lambda)}$$

where $h$ denotes Planck's constant and c the free space velocity of light. It should be noted that the spectral gain $g(\lambda)$ is not in dB in this equation. Likewise the ASE spectral power density $s_{ASE}(\lambda)$ is expressed in W/nm rather than dB. The relationship between the ASE spectral power density expressed in dB and that expressed in W/nm is defined by the following relationship:

$$S_{ASE}(\lambda) = 10\log(\lambda^3 s_{ASE}(\lambda)/hc^2)$$

From the above equations it is apparent that the spectral gain of an amplifier can be determined using two gain functions $T(\lambda, \lambda_{ref})$ and $R(\lambda,\lambda_{ref})$, while the spectral noise figure can be obtained using an additional spectral noise function $R_{ASE}(\lambda,\lambda_{ref})$, since the spectral noise function $T_{ASE}(\lambda,\lambda_{ref})$ is equivalent to the gain function $T(\lambda, \lambda_{ref})$.

It will be understood that complete characterisation of the spectral characteristics of an optical fibre amplifier require the relationship between gain at a reference wavelength $G(\lambda_{ref})$ for different input, i.e. saturating, wavelengths. The same is true for the ASE spectral power density $S_{ASE}(\lambda_{ref})$. However, this measurement is well known in the art and will not be described here.

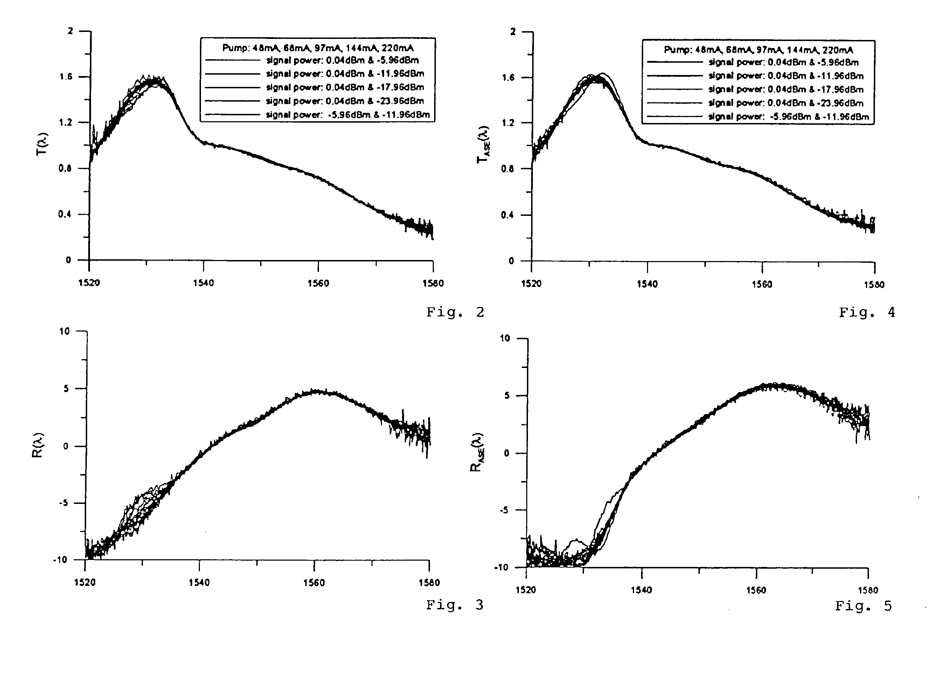

As mentioned above, the analytical model described above assumes that the optical fibre amplifier is a homogeneously-broadened system. This implies that the saturation of the amplifier is determined entirely by the number of pump and input signal photons injected into the active fibre, and thus is independent on the wavelength of the saturating signals. This is a fairly accurate assumption particularly for EDFAs at least over the typically used C-band of wavelengths between about 1540nm to 1570nm. Outside of this wavelength band some inhomogeneous saturation effects will be apparent, for example spectral hole burning. However, with the above model it is possible to identify under what conditions an amplifier is not homogeneously broadened, and, if necessary, to compensate for this behaviour. This is illustrated in the examples shown in Figs. 2 to 9.

Figs. 2 to 5 show the spectral gain functions $T(\lambda)$ and $R(\lambda)$ and the spectral noise functions $T_{ASE}(\lambda)$ and $R_{ASE}(\lambda)$ calculated for a single pumped EDFA. The functions are calculated using measured data on the spectral gain and ASE spectral power density.

The measurements were made in a standard way using a probe input signal at a tuneable wavelength $\lambda$ of known, low power relative to the signal power $\lambda_s$. The gain was measured by filtering the extracted output signal to obtain the desired probe wavelength output power. The ASE spectral power density was measured at the output of the amplifier using a spectrum analyser. Each of the Figs. 2 to 5 shows a graph made up of 25 curves. Figs. 2 and 3 illustrate the spectral gain functions $T(\lambda)$ and $R(\lambda)$, Respectively while Figs. 4 and 5 show the ASE spectral power density functions $T_{ASE}(\lambda)$ and $R_{ASE}(\lambda)$. Each of these curves is calculated from gain measurements in dB or power density measurements in W/nm subsequently converted to dB, respectively, taken at five different pumping laser diode currents, namely 48mA, 68mA, 97mA, 144mA and 220mA, and two sets of five different input signal powers with a signal wavelength $\lambda_s$ (i.e. saturating wavelength) of 1550nm, for each saturation state A and B of the amplifier. In other words, measurements were taken over the wavelength band of interest for each of the five pumping laser diode currents at signal powers of 0.04dBm and -5.96dBm, 0.04dBm and -11.96dBm, 0.04dBm and -17.96dBm, 0.04dBm and -23.96dBm and finally for -5.96dBm and -11.96dBm.

It is apparent from the curves of the T and R functions in Figs. 2 to 5 that the calculated curves deviate from one another very little around the wavelength range between about 1535nm to 1570nm. This verifies the fact that the amplifier is a homogeneously broadened system at least in this wavelength band. It further shows the repeatability of the results. It should be noted that if the measured curves representing two different saturation states A and B of the amplifier were two close to one another resulting in an incorrect T or R curve, this would be immediately apparent when the calculated curves are compared to curves based on different measured reference spectra.

Deviations in the wavelength range around about 1530nm, more specifically below about 1535nm are greater for all functions in Figs. 2 to 5. These deviations are larger than the accuracy of the measurements, and indicate that in this wavelength range the spectral functions show some dependence on the operational conditions of the amplifier. This effect is thought to be due to inhomogeneous broadening, which is observed in the experiment due to increased amplified spontaneous emission generated at around the 1530nm gain peak.

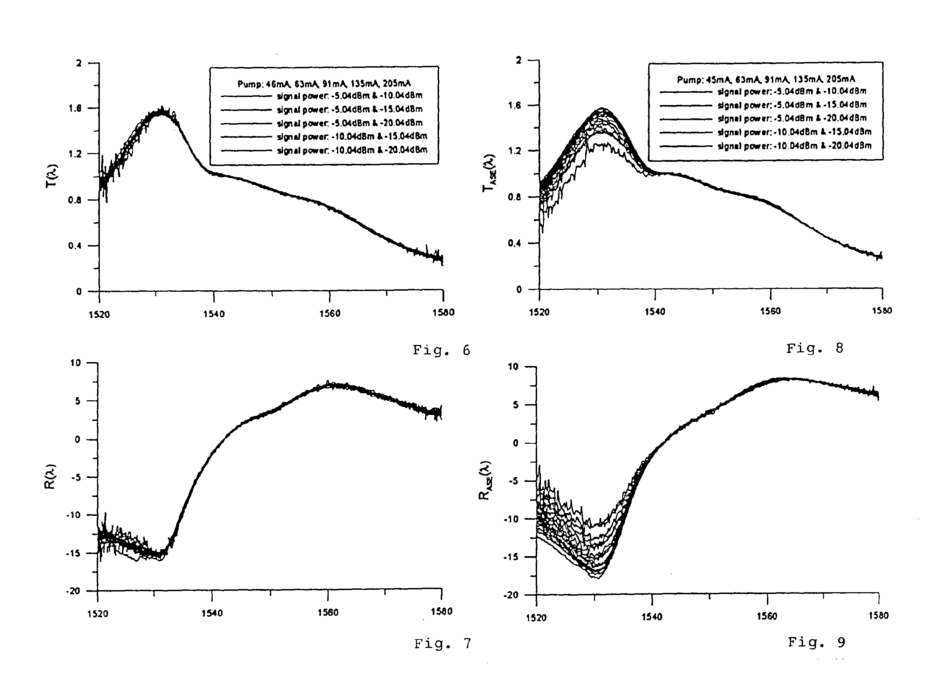

Figs. 6 to 9 show similar curves for the spectral gain Tand R functions as well as the spectral noise $T_{ASE}$ and $R_{ASE}$ functions calculated for a different amplifier. This amplifier has a built-in optical filter for reducing the ASE noise at around 1530nm. The spectral gain and noise functions of Figs. 2 to 5 and 6 to 9 differ from one another as is expected, since these functions are dependent on the amplifier type. Moreover, it is apparent that at least within the wavelength range of about 1535nm to 1570nm these spectral functions are independent of the amplifier operating conditions. Furthermore, when comparing the spectral gain and noise function curves in Figs. 2 and 4 and those of Figs. 6 and 8, that these functions are substantially the same for each amplifier. Moreover, the T-functions of both amplifiers are also substantially the same. This indicates that the amplifiers are fabricated from the same type of active fibre, since the T-function depends on the mode confinement factor and the cross-sections of resonance laser transitions, which will be the same for identical fibre types. The R-functions shown in Figs. 3, 5, 7 and 9 additionally depend on the length of the fibre and on the ASE filter characteristics. Any other components contained in the amplifier, such as isolators, couplers and the like, will affect the R-functions for a particular amplifier type.

It is apparent from the results shown in Figs. 2 to 9 that the proposed characterisation method is valid for EDFA's operating in the C-band, that is in the range of 1540nm to 1570nm. However, this model is also valid for other rare earth doped fibre amplifiers, including, but not limited to, Thulium doped fibre amplifiers, Erbium-Ytterbium doped fibre amplifiers, Praseodymium doped fibre amplifiers and Neodymium doped fibre amplifiers. The proposed characterisation method may also be valid for broader or even different wavelength ranges. For example, Thulium doped fibre amplifiers are particularly suitable for operation in the S-band communication window, that is wavelengths of between 1470nm to 1500nm, which would allow the use of the method over this range. Furthermore, the types of glass used to fabricate optical fibre amplifiers influences the operating wavelength range of the fibre amplifier and also affects other technical characteristics, such as the optimum pumping wavelength, efficiency, and the like. The tested Erbium doped fibre amplifiers are silica-based fibres. The proposed method could, however, be usefully applied to amplifiers made of other glass materials, such as fluoride, telluride, or the like.

Another class of amplifiers to which the characterisation method can be validly applied are the optical planar-glass-amplifiers, which are also termed waveguide optical amplifiers. This type of amplifier is also doped with rare earth elements such as those mentioned above.

Once the spectral functions $T(\lambda)$, $R(\lambda)$, $T_{ASE}(\lambda)$ and $R_{ASE}(\lambda)$ have been determined for a specific amplifier, this information can be used in designing optical transmission systems. Existing software tools presently used for this purpose may be modified to specifically include the T and R functions defined above to enable a more accurate modelling of a system as a whole, and thus facilitate the design process.

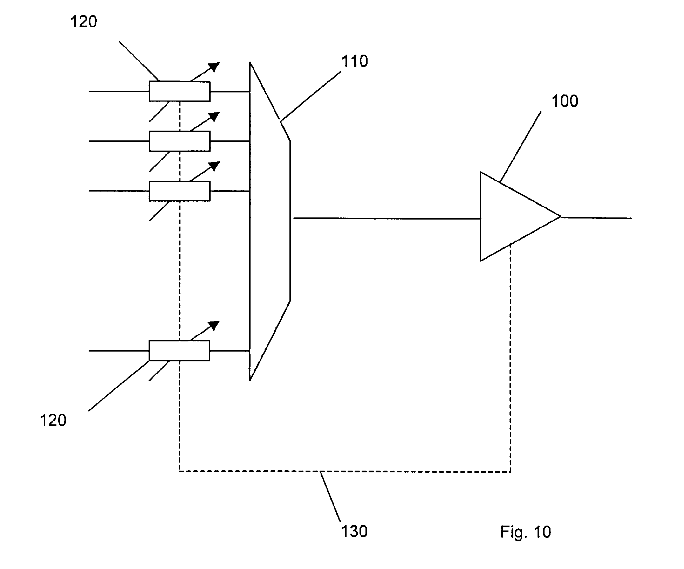

In a further example illustrated in Fig. 10, the model for spectral gain and noise figure may be used to actively control the output signal power from an optical amplifier in a wavelength division multiplexed optical transmission system. Fig 10 schematically shows an optical amplifier arrangement suitable for a node in an optical transmission system. The arrangement includes an optical amplifier 100 connected to an optical fibre carrying multiple channel wavelengths. A multiplexer 110 is connected to the same optical fibre upstream of the optical amplifier 100. Attenuators 120 tuned to each of the channel wavelengths are connected to the multiplexer input. Some form of feedback link is provided between the amplifier 100 and the attenuators and is illustrated in Fig. 10 by a dashed line 130. This feedback loop 130 provides information on the total output power of the amplifier 100, such as obtained with the optical signal monitor 60 shown in Fig. 1. It may also provide information on the output power of each channel wavelength, provided that the amplifier is equipped with the necessary filters.

It is assumed that the component referred to as the amplifier 100 is a closed module that may contain other passive or active elements, such as couplers, isolators filters and the like. It is further assumed that this amplifier module 100 has been characterised to determine the specific T and R functions as defined above such that the spectral gain and spectral noise performance over the wavelengths of interest are known. Optical amplifiers in optical transmission systems are typically operated in saturation. Thus with this knowledge of the amplifiers spectral properties it is possible to exactly control the gain of the amplifier, and therefore the output power by altering the input power. Two types of operation are possible. According to a first operation, the attenuators are adjusted to obtain constant total output signal power. In an alternative operation, the attenuators may be adjusted to maintain constant channel output power. As mentioned above, the attenuators 120 and demultiplexer 110 may be built into a node with an optical amplifier, in which case the input signal to the node would first be demultiplexed. In a point to point link, the attenuators may be connected at the beginning of a link. In this case they would be adjusted on the basis of the output signal power received at the end of the link to compensate for variations in the gain as a function of wavelength for the whole link.

## Claims

1. A method of determining the spectral gain of an optical amplifier, including the steps of:

   using a first spectral gain function $T(\lambda, \lambda_{ref})$ expressed in terms of two reference gain spectra measured at different saturation states of the amplifier and a reference wavelength $\lambda_{ref}$,
   using a second spectral gain function $R(\lambda, \lambda_{ref})$ expressed in terms of said two reference gain spectra and said reference wavelength,
   determining a measured gain of the saturated amplifier at said reference wavelength $G(\lambda_{ref})$ expressed in dB, and
   calculating the gain expressed in dB at any wavelength $\lambda$ according to the expression

   $$G (\lambda) = T(\lambda, \lambda_{ref}) \cdot G (\lambda_{ref}) + R(\lambda, \lambda_{ref}).$$

2. A method as claimed in claim 1, **characterised by**

   determining said first spectral gain function $T(\lambda, \lambda_{ref})$ by measuring the gain of the amplifier as a function of wavelength for a first saturation state of an amplifier to obtain a first reference gain spectra, $G_A(\lambda)$ in dB,
   measuring the gain of the amplifier as a function of wavelength at a second saturation state of an amplifier to obtain a second reference gain spectra $G_B(\lambda)$ in dB,
   calculating said first spectral gain function using said first and second measured gain spectra in accordance with the following expression

   $$T(\lambda, \lambda_{ref}) = (G_A(\lambda) - G_B(\lambda))/(G_A(\lambda_{ref}) - G_B(\lambda_{ref}).$$

3. A method as claimed in claim 1 or 2, **characterised by**

   determining said second spectral gain function $R(\lambda, \lambda_{ref})$ by measuring the gain of an amplifier as a function of wavelength for a first saturation state of an amplifier to obtain a first reference gain spectra $G_A(\lambda)$ in dB,
   measuring the gain of an amplifier as a function of wavelength at a second saturation state of an amplifier to obtain a second reference gain spectra $G_B(\lambda)$ in dB,
calculating said second spectral gain function using said first and second measured gain spectra in accordance with the following expression

$$R(\lambda, \lambda_{ref}) = (G_A(\lambda_{ref}) \times G_B(\lambda) - G_A(\lambda) \times G_B(\lambda_{ref})/(G_A(\lambda_{ref}) - G_B(\lambda_{ref}).$$

4. A method of **characterising** the amplified spontaneous emission spectral power density of an optical amplifier including the steps of:

using a first spectral noise function $T_{ASE}(\lambda, \lambda_{ref})$ expressed in terms of two reference amplifier output power density spectra measured at different saturation states of the amplifier and expressed in dB, and a reference wavelength $\lambda_{ref}$,
using a second spectral noise function $R_{ASE}(\lambda, \lambda_{ref})$ expressed in terms of said two reference gain spectra and a said reference wavelength, determining a measured ASE output power density of the saturated amplifier at said reference wavelength $S_{ASE}(\lambda_{ref})$ expressed in dB, and
calculating the ASE output power density $S_{ASE}(\lambda)$ expressed in dB at any wavelength $\lambda$ according to the expression

$$S_{ASE}(\lambda) = T_{ASE}(\lambda, \lambda_{ref}) \cdot S_{ASE}(\lambda_{ref}) + R_{ASE}(\lambda, \lambda_{ref}).$$

5. A method as claimed in claim 4, **characterised by**

determining said first spectral noise function $T_{ASE}(\lambda, \lambda_{ref})$ by measuring the output spectral power density $S_{ASE}$ of the amplifier as a function of wavelength $\lambda$ for a first saturation state of an amplifier to obtain a first reference noise spectra $S_{ASE\,A}(\lambda)$ expressed in dB,
measuring the output spectral power density $S_{ASE}$ of the amplifier as a function of wavelength $\lambda$ at a second saturation state of an amplifier to obtain a second reference noise spectra $S_{ASE\,B}(\lambda)$ expressed in dB, calculating said first spectral noise function using said first and second noise spectra in accordance with the following expression

$$T_{ASE}(\lambda, \lambda_{ref}) = (S_{ASE\,A}(\lambda) - S_{ASE\,B}(\lambda)) / (S_{ASE\,A}(\lambda_{ref}) - S_{ASE\,B}(\lambda_{ref}).$$

6. A method as claimed in claim 4 or 5, **characterised by**

determining said second spectral noise function $R_{ASE}(\lambda, \lambda_{ref})$ by measuring the output spectral power density $S_{ASE}$ of the amplifier as a function of wavelength $\lambda$ for a first saturation state of an amplifier to obtain a first reference noise spectra $S_{ASE\,A}(\lambda)$ expressed in dB,
measuring the output spectral power density $S_{ASE}$ of the amplifier as a function of wavelength $\lambda$ at a second saturation state of an amplifier to obtain a second reference noise spectra $S_{ASE\,B}(\lambda)$ expressed in dB, calculating said second spectral noise function using said first and second noise spectra in accordance with the following expression

$$R_{ASE}(\lambda, \lambda_{ref}) = \frac{S_{ASE\,A}(\lambda_{ref}) \cdot S_{ASE\,B}(\lambda) - S_{ASE\,A}(\lambda) \cdot S_{ASE\,B}(\lambda_{ref})}{S_{ASE\,A}(\lambda_{ref}) - S_{ASE\,B}(\lambda_{ref})}.$$

7. A method as claimed in claim 4, **characterised by**

determining said first spectral noise function $T_{ASE}(\lambda, \lambda_{ref})$ by measuring gain of the amplifier as a function of wavelength for a first saturation state of an amplifier to obtain a first reference gain spectra $G_A(\lambda)$ in dB, measuring the gain of the amplifier as a function of wavelength at a second saturation state of an amplifier to obtain a second reference gain spectra $G_B(\lambda)$ in dB,
calculating said first spectral gain function using said first and second measured gain spectra in accordance with the following expression

$$T_{ASE} (\lambda, \lambda_{ref}) = (G_A(\lambda) - G_B(\lambda))/(G_A(\lambda_{ref}) - G_B(\lambda_{ref})).$$

**8.** A method as claimed in claims 1 and 4, **characterised by**

determining the noise figure of the amplifier for any wavelength using said calculated spectral gain and spectral power density.

**9.** The use of a method as claimed in any previous claim for rare earth doped fibre amplifiers.

**10.** The use of a method as claimed in any one of claims 1 to 8 for optical planar glass amplifiers.

**11.** The use of a method as claimed in any one of claims 1 to 8 for erbium doped fibre amplifiers (EDFA).

**12.** The use of the method as claimed in claim 10, wherein said erbium doped fibre amplifiers operate in the wavelength band between 1540nm and 1570nm.

Fig. 1

Fig. 2

Fig. 4

Fig. 3

Fig. 5

EP 1 193 893 A1

Fig. 6

Fig. 8

Fig. 7

Fig. 9

Fig. 10

European Patent Office

**EUROPEAN SEARCH REPORT**

Application Number

EP 00 12 1567

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| D,X | BURGMEIER J ET AL: "A BLACK BOX MODEL OF EDFA'S OPERATING IN WDM SYSTEMS" JOURNAL OF LIGHTWAVE TECHNOLOGY, US, IEEE. NEW YORK, vol. 16, no. 7, 1 July 1998 (1998-07-01), pages 1271-1275, XP000778825 ISSN: 0733-8724 Section III. Modeling of Black Box Optical Amplifiers * page 1272 * | 1,2,4,5, 7-12 | H04B10/08 |
| D,A | G. JACOBSEN ET AL.: "PUMP POWER DEPENDENT BLACK BOX EDFA MODEL" JOURNAL OF OPTICAL COMMUNICATION, October 2000 (2000-10), pages 171-177, XP000991032 * page 171 * | 1-12 | |

TECHNICAL FIELDS SEARCHED (Int.Cl.7)

H04B

The present search report has been drawn up for all claims

| Place of search | Date of completion of the search | Examiner |
|---|---|---|
| THE HAGUE | 9 March 2001 | Ribbe, A |

EPO FORM 1503 03.82 (P04C01)